# EUROPEAN PATENT APPLICATION

(11) **EP 2 410 674 A1**
(43) Date of publication of application: **25.01.2012**
(21) Application number: 10753145.1
(22) Date of filing: 19.03.2010
(51) Int. Cl.: H04B 10/00

(54) **METHOD FOR IDENTIFYING AN OPTICAL NETWORK UNIT AND AN OPTICAL ACCESS SYSTEM AND DEVICE**

(30) Priority: 20.03.2009 CN 200910106303
(71) Applicant: Huawei Technologies Co., Ltd., Shenzhen, Guangdong 518129 (CN)
(72) Inventor: YANG, Sulin, Shenzhen Guangdong 518129 (CN); YIN, Jinrong, Shenzhen Guangdong 518129 (CN)
(74) Representative: Epping - Hermann - Fischer
(86) International application number: PCT/CN2010/071158
(87) International publication number: WO 2010/105578

(57) **Abstract**

The present invention discloses a method for identifying an optical network unit (ONU) in an optical access system, including: receiving uplink signals sent by a plutality of ONUs through a shared optical transmission path; extracting detection signals from the uplink signals, and obtaining signal characteristics of the detection signals; and comparing the signal characteristics with a reference characteristic value, and determining, according to a result of the comparison, whether the multiple ONUs that send the uplink signals include a point-to-point connection-based (P2P) ONU. Through the method for identifying an ONU in an optical access system, when P2P ONU is mistakenly connected into a point-to-multipoint (P2MP) connection-based optical access system, a fault alarm can be raised quickly, which facilitates system maintenance and troubleshooting. The present invention further discloses an optical access system, an optical line terminal, and an optical module.

## Description

This application claims priority to Chinese Patent Application No. 200910106303.0, filed with the Chinese Patent Office on March 20, 2009 and entitled "METHOD FOR IDENTIFYING AN OPTICAL NETWORK UNIT IN OPTICAL ACCESS SYSTEM AND AN OPTICAL ACCESS SYSTEM AND DEVICE", which is incorporated herein by reference in its entirety.

### FIELD OF THE INVENTION

The present invention relates to communication technologies, and in particular, to a method for automatically identifying an Optical Network Unit (ONU) in an optical access system, an optical access system, an Optical Line Terminal (OLT), and an optical module.

### BACKGROUND OF THE INVENTION

While optical fibers replace copper cables as a mainstream access mode in current network technologies, the application of the optical access technology is booming.

Passive Optical Network (PON) technology is an optical access technology based on Point-to-MultiPoint (P2MP) connections. A PON system generally includes an OLT at a central office and multiple ONUs at user premises. The ONUs communicate with the OLT through a shared optical transmission path. To prevent conflict between uplink signals of the ONUs, data is generally sent in a Time Division Multiple Access (TDMA) mode in the PON system. That is, timeslots are allocated to the ONUs as authorized by the OLT, and the ONU sends uplink signals in accordance with timeslots allocated by the OLT strictly.

Another typical optical access technology in the art is a Point-to-Point (P2P) optical Ethernet access technology. A P2P optical Ethernet access system generally adopts a P2P network architecture, where each ONU is connected to an OLT independently. Therefore, in the P2P optical Ethernet access system, a scenario that an optical transmission path is shared by multiple ONUs does not exist, the OLT does not control uplink sending from the ONU, instead, the ONU sends signals after the ONU is powered on.

In practice, it is possible that the P2P ONU in the optical Ethernet access system is mistakenly connected into the P2MP PON system for reasons such as misoperation. The P2P ONU is in the light-emitting state after being powered on, however, the OLT in the existing P2MP PON system is unable to identify the P2P ONU, and consequently unable to control light emission of the P2P ONU by allocating timeslots to the mistakenly connected P2P ONU. Therefore, the light emission of the P2P ONU interferes with (for example, overlay) the uplink signals sent by the P2MP ONUs to the OLT, which causes a problem that the P2MP PON system fails to run normally.

### SUMMARY OF THE INVENTION

In order to solve the above problems, it is necessary to provide a method for identifying an ONU automatically in an optical access system, an optical access system, an OLT, and an optical module that can be applied to the OLT.

A method for identifying an ONU automatically in an optical access system in an embodiment of the present invention includes: receiving uplink signals sent by a plurality of ONUs through a shared optical transmission path; extracting detection signals from the uplink signals, and obtaining signal characteristics of the detection signals; and comparing the signal characteristics with a reference characteristic value, and determining, according to a result of the comparison, whether the ONUs that send the uplink signals include a P2P connection-based ONU (P2P ONU for short).

An OLT provided by an embodiment of the present invention includes: a receiving module, configured to receive uplink signals that are sent by a plurality of ONUs and are transmitted through a shared optical transmission path; a characteristics identifying module, configured to extract detection signals from the uplink signals received by the receiving module, obtain signal characteristics of the detection signals, compare the signal characteristics with a reference characteristic value, and determining, according to a result of the comparison, whether the ONUs that send the uplink signals include a P2P ONU.

An optical module provided by an embodiment of the present invention includes: an optical receiving part, configured to receive uplink signals sent by a plurality of ONUs through a shared optical transmission path; and a characteristics identifying part, configured to extract detection signals from the uplink signals, obtain signal characteristics of the detection signals, compare the signal characteristics with a reference characteristic value, and determining, according to a result of the comparison, whether the ONUs that send the uplink signals include a P2P ONU.

An optical access system provided by an embodiment of the present invention includes: a plurality of ONUs, configured to send uplink signals through a shared optical transmission path; and an OLT, configured to receive the uplink signals, extract detection signals from the uplink signals, obtain signal characteristics of the detection signals, compare the signal characteristics with a reference characteristic value, and determininig, according to a result of the comparison, whether the ONUs that send the uplink signals include a P2P ONU.

Through the method for identifying ONUs in an optical access system, and the corresponding optical access system and device according to the embodiments of the present invention, when a P2P ONU is mistakenly connected into a P2MP connection-based optical access system, the OLT can identify the P2P ONU in the system automatically and raise a fault alarm quickly, which facilitates system maintenance and troubleshooting. Therefore, the maintenance efficiency of the system is improved, and the costs of operation and maintenance of the network operator are reduced.

### BRIEF DESCRIPTION OF THE DRAWINGS

FIG. 1 is a flow chart of a method for identifying an ONU in an optical access system according to an embodiment of the present invention;
FIG. 2 is a schematic structural diagram of an OLT according to an embodiment of the present invention;
FIG. 3 is a schematic structural diagram of a receiving module in an OLT according to an embodiment of the present invention;
FIG. 4 is a schematic structural diagram of a characteristics identifying module in an OLT according to an embodiment of the present invention;
FIG. 5 is a schematic structural diagram of a MAC module in an OLT according to an embodiment of the present invention;
FIG. 6 is a schematic structural diagram of a specific optional scheme for an OLT to extract signals according to an embodiment of the present invention;
FIG. 7 is a schematic structural diagram of another optional scheme for an OLT to extract signals according to an embodiment of the present invention;
FIG. 8 is a schematic structural diagram of another optional scheme for an OLT to extract signals according to an embodiment of the present invention;
FIG. 9 is a schematic structural diagram of an optional scheme for an OLT to obtain signal characteristics according to an embodiment of the present invention;
FIG. 10 is a schematic structural diagram of another optional scheme for an OLT to obtain signal characteristics according to an embodiment of the present invention;
FIG. 11 is a schematic structural diagram of another optional scheme for an OLT to obtain signal characteristics according to an embodiment of the present invention;
FIG. 12 is a schematic structural diagram of an optical module according to an embodiment of the present invention; and
FIG. 13 is a schematic structural diagram of an optical access system according to an embodiment of the present invention.

### DETAILED DESCRIPTION OF THE EMBODIMENTS

The present invention is detailed below with reference to accompanying drawings and embodiments.

The method for identifying ONUs in an optical access system according to an embodiment of the present invention can realize an automatical identification of a P2P connection-based ONU (P2P ONU for short) when the P2P ONU is mistakenly connected into a P2MP connection-based optical access system (such as PON system), and accordingly raise a fault alarm, which facilitates system maintenance and troubleshooting. The optical access system supports an OLT to communicate with a P2MP connection-based ONU (P2MP ONU for short) through a shared optical transmission path. The method may include: the OLT receives uplink signals transmitted through a shared optical transmission path; the OLT extracts detection signals from the uplink signals, and obtains corresponding signal characteristics of the detection signals; and the OLT compares the signal characteristics with a reference characteristic value, and determines, according to a result of the comparison, whether a P2P ONU is connected into the optical access system.

Further, the OLT may extract the detection signals by mirroring output signals of an optical receiver that receives the uplink signal; or extract the detection signals from an inside or an output side of an amplifier that amplifies the uplink signals; or extract the detection signals from a Media Access Control (MAC) circuit module that processes the uplink signals.

Further, in an embodiment of the present invention, the signal characteristics may be frequency characteristics, and the OLT may obtain the frequency characteristics by filtering the extracted detection signals (such as lowpass filtering or bandpass filtering) or by performing a spectrum analysis on the extracted detection signals. Alternatively, in another embodiment of the present invention, the signal characteristics may be code characteristics, and the OLT may obtain the code characteristics by perform a code analysis on the detection signals.

Further, the reference characteristic value corresponds to the output characteristics of the P2P ONU. For example, the reference characteristic value may be consistent with the signal characteristics (such as frequency characteristics and/or code characteristics) of an output signal of the P2P ONU. The reference characteristic value may be a frequency reference value and/or a code reference value, and may be preset or dynamically set in a storage unit inside the OLT.

Further, after receiving the uplink signals, the OLT may detect the uplink signals to determine whether a preset trigger condition is fulfilled, and an extraction of the detection signal and an obtainment of the signal characteristics are performed only when the trigger condition is fulfilled. Specifically, the preset trigger condition include but not limited to: a Bit Error Rate (BER) of the uplink signals increases upon the condition that a received optical power is normal; or the OLT is unable to delimit or frame the received uplink signals. Alternatively, the OLT may extract the detection signals and obtain signal characteristics in real time or periodically, and determine whether any abnormal ONU is connected to the system subsequently.

To better illustrate the embodiments of the present invention, a specific application in a P2MP PON system is taken as an example for detailed description. It should be understood that the applicable scene of the method is not limited to the P2MP PON system, the P2MP PON system may be but is not limited to a GPON system or an EPON system, and may include an OLT and multiple ONUs. The P2MP PON system supports the OLT to communicate with P2MP ONUs through a shared optical transmission path.

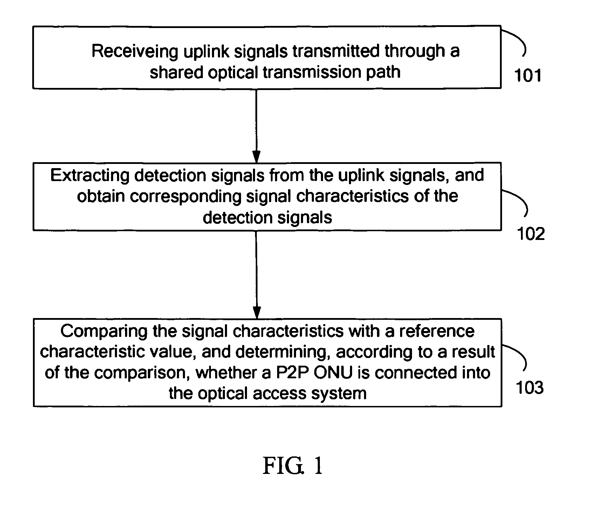

As shown in FIG. 1, the method includes the following steps:
Step 101: the OLT receives uplink signals transmitted through a shared optical transmission path of an optical access system.

Specifically, a receiving module in the OLT may be used to receive the uplink signals that are sent by the ONUs and are transmitted through the shared optical transmission path. The uplink signals may be optical signals transmitted to the optical receiver in the receiving module, and the optical receiver may convert the optical signals into electric signals. In addition, the OLT may use a pre-amplifier and a limiting amplifier (LA) in the receiving module to amplify and shape the electric signals respectively.

Step 102: The OLT extracts detection signals from the uplink signals, and obtains corresponding signal characteristics of the detection signals.

Firstly, the OLT extracts a part of the uplink signals received by the receiving module as the detection signals. The detection signals, as signals to be detected, are used to detect whether any P2P ONU exists in the P2MP PON system. Specifically, in an embodiment of the present invention, a characteristics identifying module in the OLT may extract the detection signals from the receiving module, for example, by mirroring output signals of the optical receiver in the receiving module, or extract the detection signals from an inside or an output side of an amplifier (such as the preamplifier or the limiting amplifier) in the receiving module. In other embodiments, the detection signals may be extracted from a circuit module that processes the uplink signals in the OLT, for example, from a MAC chip circuit module designed for media access control processing.

Secondly, the OLT obtains corresponding signal characteristics from the extracted detection signals. Specifically, the OLT may use a characteristics identifying module to obtain the corresponding signal characteristics such as frequency characteristics or code characteristics from the extracted detection signals. In an embodiment, the OLT may obtain the frequency characteristics of the detection signals by filtering the detection signals (such as lowpass filtering or bandpass filtering) or by performing a spectrum analysis on the detection signals. In another embodiment, the OLT may obtain the code characteristics of the detection signals by performing a code analysis on the detection signals. Because the detection signals are extracted from the uplink signals, the signal characteristics of the detection signals may be directly used to represent the signal characteristics of the uplink signals.

Moreover, in step 102, the OLT may extract the detection signals and obtain the signal characteristics in real time; alternatively, the OLT may extract the detection signals and obtain the signal characteristics periodically. For example, the OLT extract a part of the received uplink signals as detection signals at intervals, and obtain from the detection signals signal characteristics representing the uplink signals. The signal characteristics may be frequency characteristics or code characteristics, and serve as a basis for subsequently determining whether any P2P ONU is connected to the system.

Alternatively, before extracting the detection signals from the uplink signals, the OLT may detect and analyze in real time or periodically the uplink signals received by the receiving module to determine whether a preset trigger condition is fulfilled. The preset trigger condition may include but not limited to: a BER of uplink signals increases when a received optical power is normal; or the OLT is unable to delimit or frame the uplink signals accurately. In addition, the extraction of the detection signals and the obtainment of the signal characteristics are performed only when the uplink signals meet the preset trigger condition.

Furthermore, when it is determined that the uplink signals meet the preset trigger condition, the OLT may also suspend or stop an uplink sending of the P2MP ONU before obtaining the signal characteristics. For example, in an embodiment, the OLT may reserve one or multiple empty windows in an uplink direction. In the empty window, the uplink signals sent by the P2MP ONU are suspended. Because the OLT is unable to control the P2P ONU, if a P2P ONU is connected to the system, only the P2P ONU sends the uplink signals in the empty windows. In addition, a length of the empty window may be set as required, or adjusted by the OLT automatically. In other embodiments, for example, in a GPON system, the OLT may control the P2MP ONU to stop uplink sending by refusing to grant an uplink bandwidth to the P2MP ONU, or by sending a command to the P2MP ONU through a management/control module in the OLT.

Step 103: The OLT compares the signal characteristics with a reference characteristic value, and determining, according to a result of the comparison, whether a P2P ONU is connected into the optical access system.

Specifically, in an embodiment, the management/control module in the OLT may preset a reference characteristic value (such as a frequency reference value or code reference value) corresponding to the P2P ONU in a storage unit of the characteristics identifying module. The OLT may use the characteristics identifying module to compare the signal characteristics of the detection signals with the reference characteristic value after the signal characteristics (such as frequency characteristics or code characteristics) of the detection signals are obtained. If the signal characteristics match the reference characteristic value, it is determined that a P2P ONU is connected into the system. The matching may refer to that the signal characteristics coincide with the reference characteristic value, or the signal characteristics exceed the reference characteristic value, that is, the reference characteristic value is a reference threshold for determine whether a P2P ONU exists. In addition, the matching may alternatively refer to that the similarity between the signal characteristics and the preset reference value reaches a preset extent of similarity.

In another embodiment, reference characteristic value related to the P2MP ONU corresponding to the P2MP PON system (such as GPON/EPON system) may be preset in a characteristics identifying module in the OLT. In this case, when the signal characteristics obtained by the OLT cannot match the reference characteristic value, it is judged that an abnormal ONU is connected into the system.

In other embodiments, the reference characteristic values are not necessarily preset in the characteristics identifying module. For example, the OLT may dynamically set the reference characteristic values inside the characteristics identifying module through a management/control module in the OLT, which improves flexibility of the system.

Further, after determining, according to the comparison result, that a P2P ONU is connected to the system, the characteristics identifying module in the OLT may further send a corresponding indication signal to the management/control module. The management/control module may further perform corresponding processing including: confirming the determination result of the characteristics identifying module (for example, analyzing the performance statistic information of the data receiving end and/or change of the performance statistic information, and confirming the determination result if on the data receiving end also occur similar cases such as increase of BER, frame loss, and failure of activating the new ONU), and sending an alarm to a mainboard or a network management device through an internal protocol or a Simple Network Management Protocol (SNMP) to indicate that a P2P ONU exists in the system.

Through the method for identifying the P2P ONU automatically in the embodiment of the present invention, when a P2P ONU is mistakenly connected into the P2MP PON system, the P2MP PON system can send a fault alarm quickly, which facilitates system maintenance and troubleshooting, improves the system maintenance efficiency and Quality of Service (QoS) of the network, and reduces the operation and maintenance costs of the network operator.

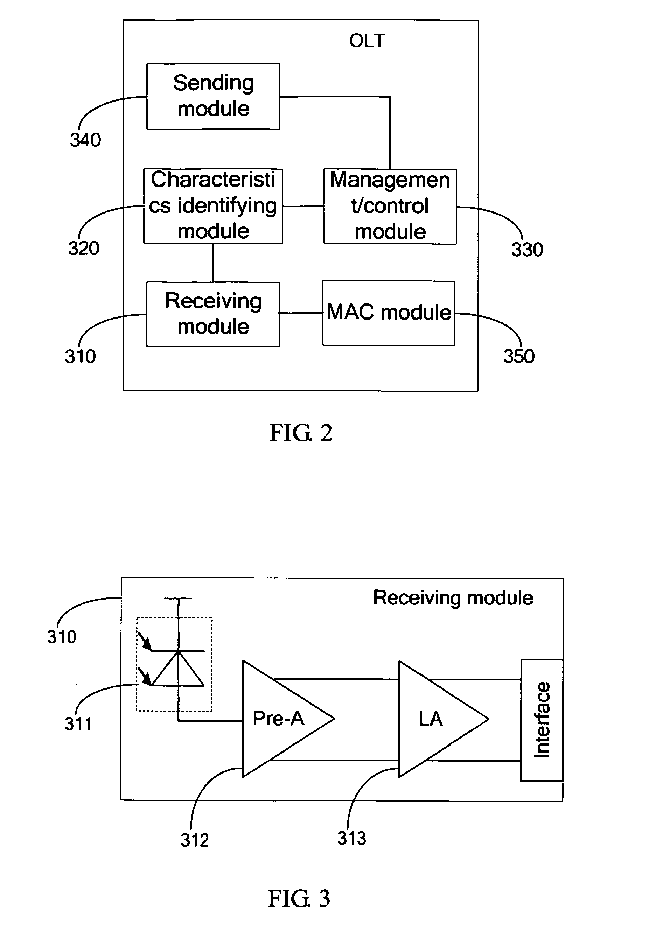

Based on the preceding method, an OLT is further provided by an embodiment of the present invention. The OLT may be applied to a P2MP optical access system such as an EPON system or a GPON system, and can communicate with multiple ONUs through a shared optical transmission path in the optical access system. As shown in FIG. 2, an OLT provided by an embodiment of the present invention includes:
a receiving module 310, configured to receive uplink signals transmitted through a shared optical transmission path of the optical access system; and
a characteristics identifying module 320, connected to the receiving module 310, and configured to extract detection signals from the uplink signals received by the receiving module 310, obtain corresponding signal characteristics of the detection signals, compare the signal characteristics with a reference characteristic value, and determine, according to the result of the comparison, whether any P2P ONU is connected to the access system.

The OLT may further include:
a management/control module 330, connected to the characteristics identifying module 320, and configured to preset or dynamically set a reference characteristic value in the characteristics identifying module 320, where the reference characteristic value may be frequency reference values or code reference values;
a sending module 340, configured to send downlink signals to the ONU, for example, send a command of suspending or stopping uplink sending to a corresponding P2MP ONU under control of the management/control module 330 before the characteristics identifying module 320 extracts the detection signals; and
a Media Access Control (MAC) module 350, connected to the receiving module 310, and configured to perform MAC processing for the uplink signals received by the receiving module 310.

The characteristics identifying module 320 may send a corresponding indication signal to the management/control module 330 after determining that the uplink signals received by the receiving module 310 include signals sent by the P2P ONU; and the management/control module 330 may send an alarm according to the indication signal sent by the characteristics identifying module 320.

Further, as shown in FIG. 3, in an embodiment of the present invention, the receiving module 310 may include:
an optical receiver 311, configured to receive optical signals transmitted through the uplink path, and convert the optical signals into electric signals;
a preamplifier 312, connected to the optical receiver 311, and configured to amplify the electric signals; and
a limiting amplifier 313, connected to the preamplifier 312, and configured to shape and judge the electric signals amplified by the preamplifier 312, and output digital signals representing "0" and "1".

It should be understood that the preamplifier 312 and the limiting amplifier 313 are optional; in other embodiments, the functions of the preamplifier 312 and the clipping amplifier 313 may be integrated in one amplifier for implementation.

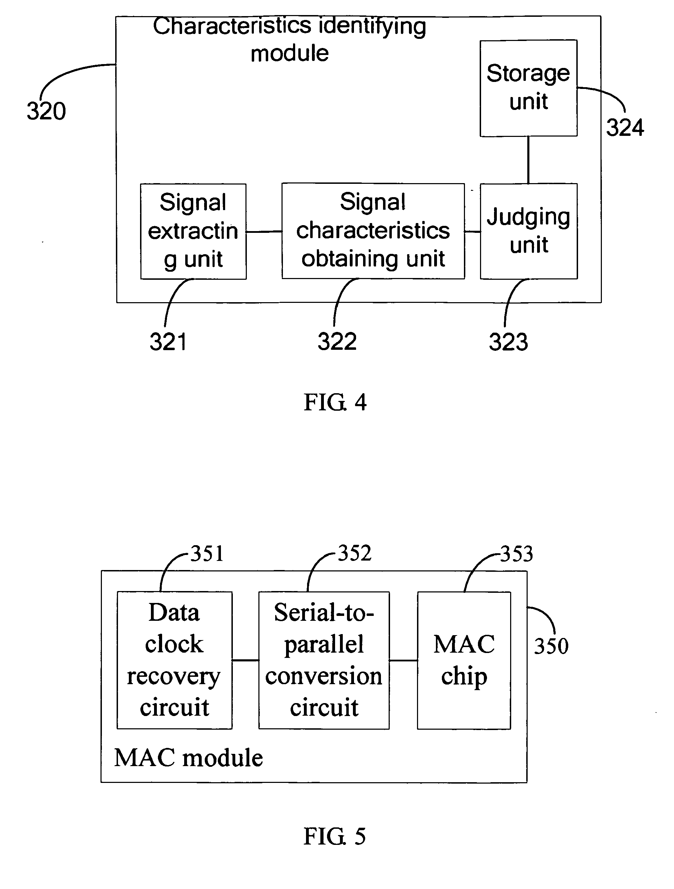

Further, as shown in FIG. 4, in an embodiment of the present invention, the characteristics identifying module 320 may include:
a signal extracting unit 321, configured to extract a part of the uplink signals received by the receiving module 310 as detection signals;
a signal characteristics obtaining unit 322, connected to the signal extracting unit 321, and configured to obtain corresponding signal characteristics from the detection signals extracted by the signal extracting unit 321; and
a judging unit 323, connected to the signal characteristic extracting unit 322, and configured to: compare the signal characteristics obtained by the signal characteristics obtaining unit 322 with a reference characteristic value, and output an indication signal indicating a P2P ONU is discovered when a preset mapping relationship is fulfilled between the signal characteristics and the reference characteristic value, the preset mapping relationship may refer to that the signal characteristics match the reference characteristic value.

Further, the characteristics identifying module 320 may further include:
a storage unit 324, configured to store the reference characteristic value, and send the reference characteristic value to the judging unit. The reference characteristic value stored in the storage unit 324 may be preset by the management/control module 330, or dynamically set by the management/control module 330 as required.

Further, the signal extracting unit 321, the signal characteristics obtaining unit 322, the judging unit 323, and the storage unit 324 may be integrated in one chip, or some of them are integrated in one chip. Alternatively, in other embodiments, such units may be integrated inside the receiving module 310, for example, integrated in the preamplifier 312 or the limiting amplifier 313.

Further, as shown in FIG. 5, in an embodiment, the MAC module 350 may include:
a data clock recovery circuit 351, which may be a burst-mode clock and data recovery (BCDR) circuit, and is configured to recover clocks and data signals of the uplink signals in the received data;
a serial-to-parallel conversion circuit 352, configured to perform serial-to-parallel conversion for the data signals processed by the data clock recovery circuit 351; and
a MAC chip 353, configured to perform MAC processing for the parallel data signals output by the serial-to-parallel conversion circuit 352.

It should be understood that the data clock recovery circuit 351 and the serial-to-parallel conversion circuit 352 are optional. For example, the MAC chip 353 may perform MAC processing for the output signals of the receiving module 310 directly. In another embodiment, the data clock recovery circuit 351 and the serial-to-parallel conversion circuit 352 may be integrated in another functional module (such as receiving module 310) of the OLT for implementation.

Furthermore, in other embodiments of the OLT provided by the present invention, the characteristics identifying module 320 may be connected to the MAC module 350 directly, and configured to extract detection signals from the uplink signals processed by the MAC module 350, obtain corresponding signal characteristics from the detection signals, and determining, according to the signal characteristics, whether any P2P ONU is connected to the system.

The following optional embodiments give more details about how the signal extracting unit 321 extracts the detection signals.

Firstly, in an embodiment, as mentioned above, the signal extracting unit 321 may extract detection signals from the receiving module 310. Optional schemes of extracting detection signals from the receiving module are as follows:

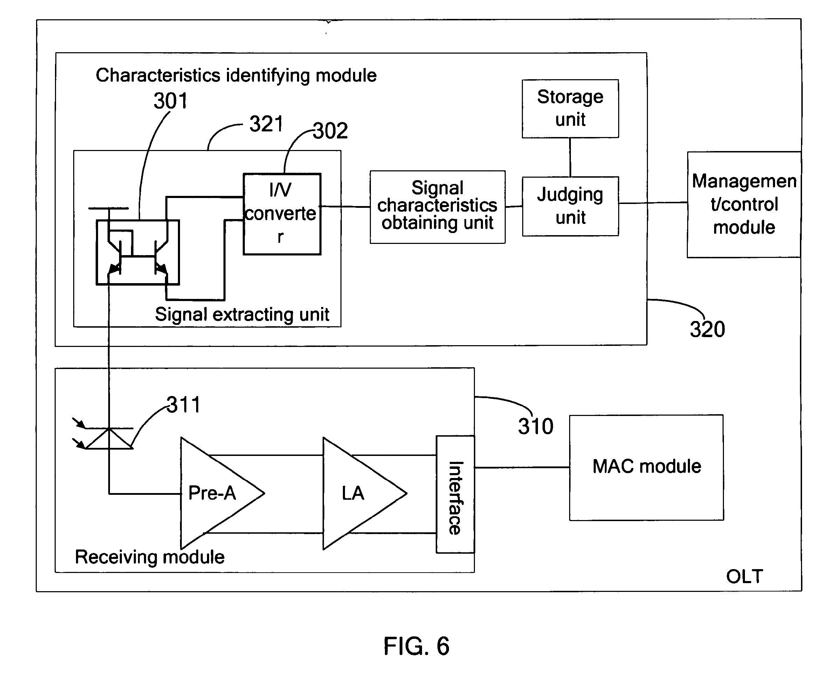

As shown in FIG. 6, in an optional scheme, the signal extracting unit 321 extracts the detection signals by mirroring output signals of the optical receiver 311 of the receiving module 310, for example, by mirroring output currents of the optical receiver 311. Specifically, the signal extracting unit 321 includes a mirroring current source 301 and a current-to-voltage (I/V) converter 302. The mirroring current source 301 is connected to the optical receiver 311, and is configured to mirror a current that flows through the optical receiver 311. The I/V converter 302 is connected to the mirroring current source 301, and is configured to convert the mirrored current obtained by the mirroring current source 301 into voltage signals which are in a certain relationship (proportional relationship or logarithm relationship) to the mirrored current, and use the voltage signals as the detection signals.

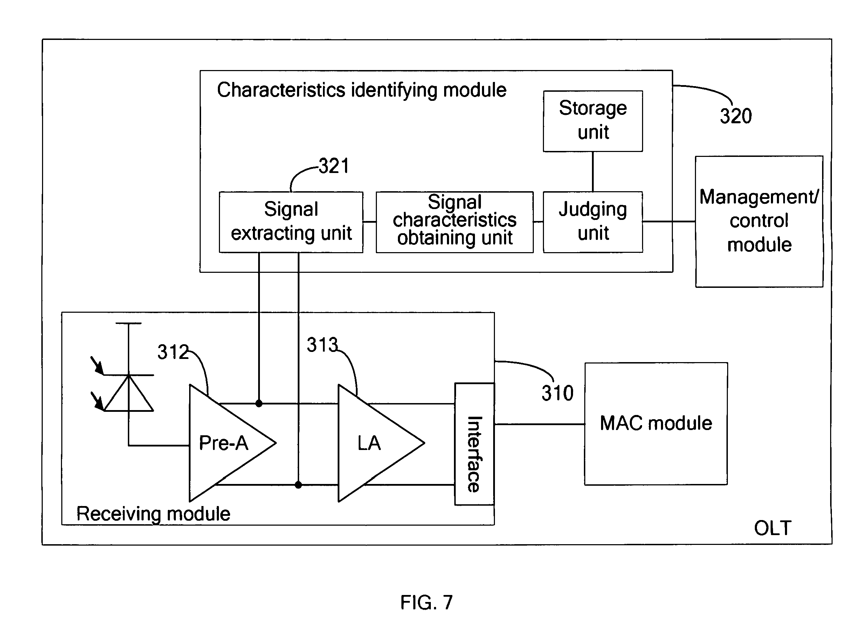

As shown in FIG. 7, in another optional scheme, the signal extracting unit 321 may extract the detection signals from an output side of the preamplifier 312 of the receiving module 310. Specifically, the signal extracting unit 321 may be connected to an output side of the preamplifier 312 in a direct-current (DC) coupling mode or an alternate current (AC) coupling mode, and extract part of output signals from the output side of the preamplifier 312 as the detection signals.

In other optional schemes, the signal extracting unit 321 may extract the detection signals from an inside of the preamplifier 312 of the receiving module 310. For example, when a multi-stage amplifier exists inside the preamplifier, the signal extracting unit 321 may be connected to an output side of any stage of sub-amplifiers inside the preamplifier 310 in a DC coupling mode or an AC coupling mode, and extract output signals from the output side of the sub-amplifier as the detection signals. When a multi-stage amplifier also exists inside the limiting amplifier 313 of the receiving module 310, the signal extracting unit 320 may extract signals from an output side of any stage of sub-amplifiers (including the final output side) inside the limiting amplifier 313, and use the extracted signals as the detection signals.

Secondly, in another embodiment, as mentioned above, the signal extracting unit 321 may extract detection signals from the MAC module 350. Specifically, optional schemes of extracting detection signals from the MAC module are as follows:

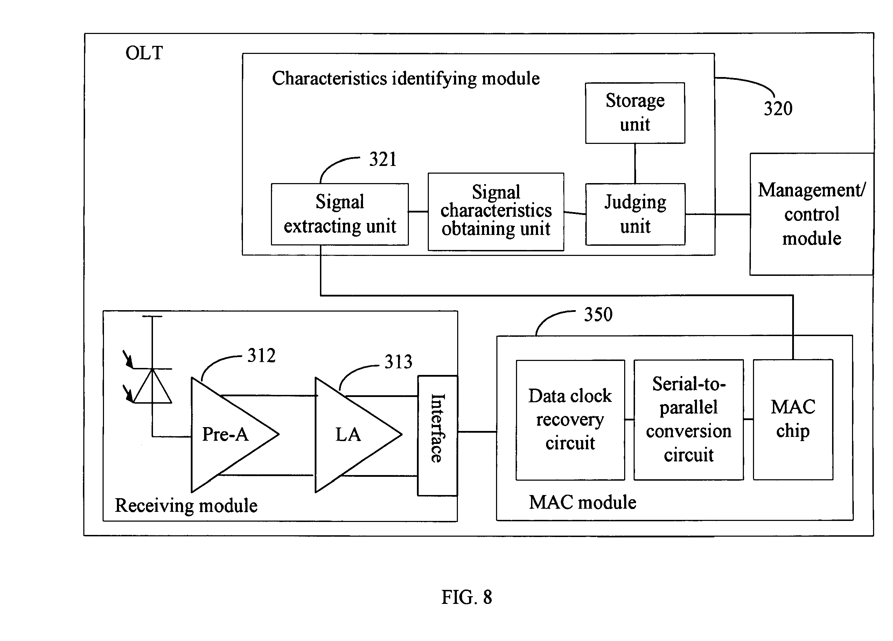

As shown in FIG. 8, in an optional scheme, the signal extracting unit 321 may be connected to the MAC chip 353, and may extract a part of signals from parallel data received by the MAC chip 353 as the detection signals. In this implementing scheme, the detection signals extracted by the signal extracting unit 321 have undergone data signal recovery performed by the data clock recovery circuit 321 and the serial-to-parallel conversion performed by the serial-to-parallel conversion circuit, and thus the detection signals can represent the uplink signals sent by the ONU more accurately. Therefore, the accuracy of subsequent identification of the P2P ONU is less affected by data impairment or interference during data transmission.

In another optional scheme, the signal extracting unit 321 may be connected to an output side of the MAC chip, and may extract a part of the uplink signals processed by the MAC chip as the detection signals.

The following embodiments give more details about how the signal characteristics obtaining unit 322 obtains the signal characteristics.

Specifically, the signal extracting unit 321 extracts the detection signals, and then sends the detection signals to the signal characteristics obtaining unit 322. The signal characteristics obtained by the signal characteristics obtaining unit 322 from the detection signals may include frequency characteristics or code characteristics. Optional schemes of obtaining signal characteristics are as follows:

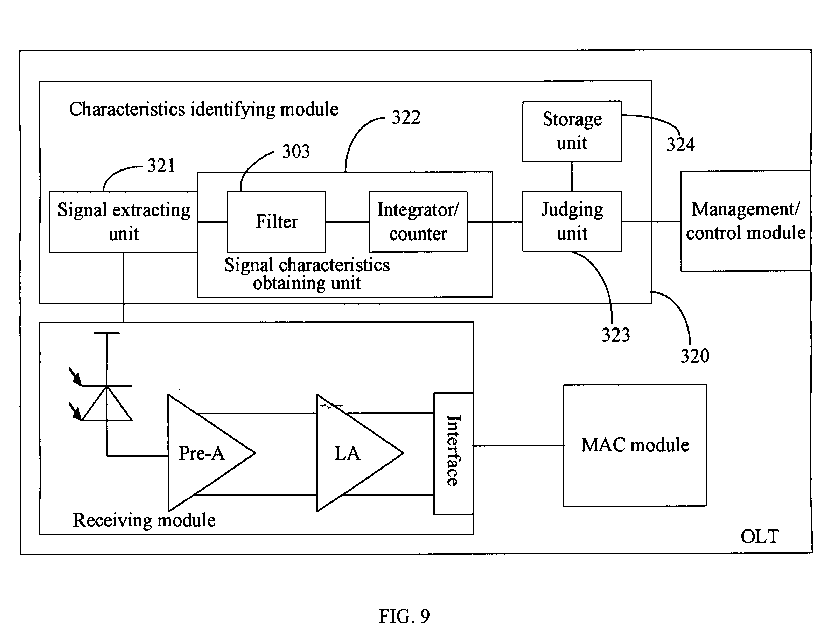

As shown in FIG. 9, in an optional scheme, the signal characteristics obtaining unit 322 may be a frequency characteristics obtaining unit, and may obtain the frequency characteristics of the detection signals by filtering the detection signals. Specifically, the signal characteristics obtaining module 322 includes a filter 303. The filter 303 may be a bandpass filter or lowpass filter, and is connected to the signal extracting unit 321, and is configured to obtain the frequency characteristics of the detection signals by filtering the detection signals, and use the frequency characteristics as signal characteristics.

For example, a frequency of the signals sent by a 100M P2P ONU is generally 62.5 MHz. In this case, the filter 303 may be configured as a bandpass filter whose passband is 60 MHz to 65 MHz. For the P2MP GPON system, according to its scrambling characteristics, the probability of generating signals in this band during the data receiving process is far less than 1%%. Therefore, when a P2P ONU is connected into the GPON system, the signal characteristic obtaining module 322 outputs signals with the frequency of the P2P ONU, namely, 62.5 MHz signals. If the corresponding frequency characteristics are set in the storage unit 324 inside the characteristics identifying module 320, the judging unit 323 inside the characteristics identifying module 320 can judge quickly that a P2P ONU is connected in the GPON system and send the corresponding indication signal.

Further, to improve accuracy of the judgment, the signal characteristics obtaining unit 322 may further include an integrator connected to an output side of the filter 303. The integrator is configured to perform integral processing for the signals output by the filter 303 to generate corresponding electrical level signals. If a corresponding level amplitude threshold is preset in the storage unit 324, when a P2P ONU is connected into the system, an amplitude of the electrical level signals output by the signal characteristic obtaining unit 322 exceeds the level amplitude threshold, and the judging unit 323 quickly sends an indication signal indicating that a P2P ONU is connected into the system.

Further, the integrator may be replaced by a counter. When the filter 303 outputs the frequency characteristics of the P2P ONU, the counter starts counting and sends the count value in a preset period to the judging unit 323. Meanwhile, a corresponding threshold is set in the storage unit 324. When the count value provided by the counter exceeds the threshold, the judging unit 323 quickly sends an indication signal indicating that an abnormal ONU is connected into the system.

In addition, inside the signal characteristics obtaining module 322, a single-stage amplifier or multi-stage amplifier (not illustrated in the figure) may be connected in front of the filter 303 to amplify the detection signals extracted by the signal extracting unit 321.

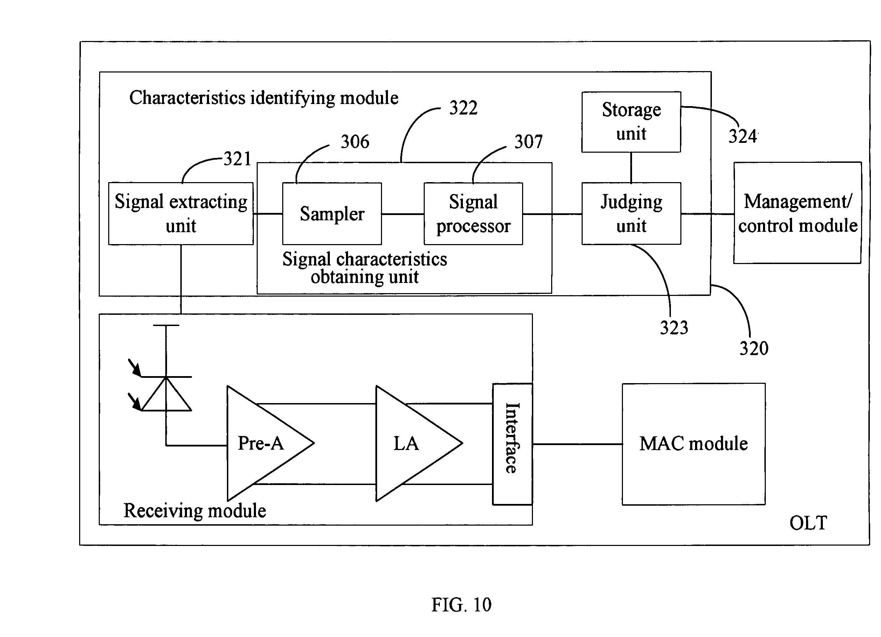

As shown in FIG. 10, in another optional scheme, the signal characteristics obtaining unit 322 may obtain the frequency characteristics of the detection signals by performing pectrum analysis on the detection signals. Specifically, the signal characteristics obtaining unit 322 may include a sampler 306 and a signal processor 307. The sampler 306 is configured to sample the detection signals extracted by the extracting unit 321; the signal processor 307 is configured to analyze sampled digital signals to obtain the signal characteristics. For example, the signal processor 307 may analyze spectrum of the digital signals through Fourier transformation to obtain the frequency characteristics of the detection signals as the signal characteristics.

In addition, the signal characteristics obtaining unit 322 may further include a preprocessor (not illustrated in the figure) connected between the signal extracting unit 321 and the sampler 306, and the preprocessor is configured to adjust the detection signals extracted by the signal extracting unit, for example, filter or amplify the detection signals.

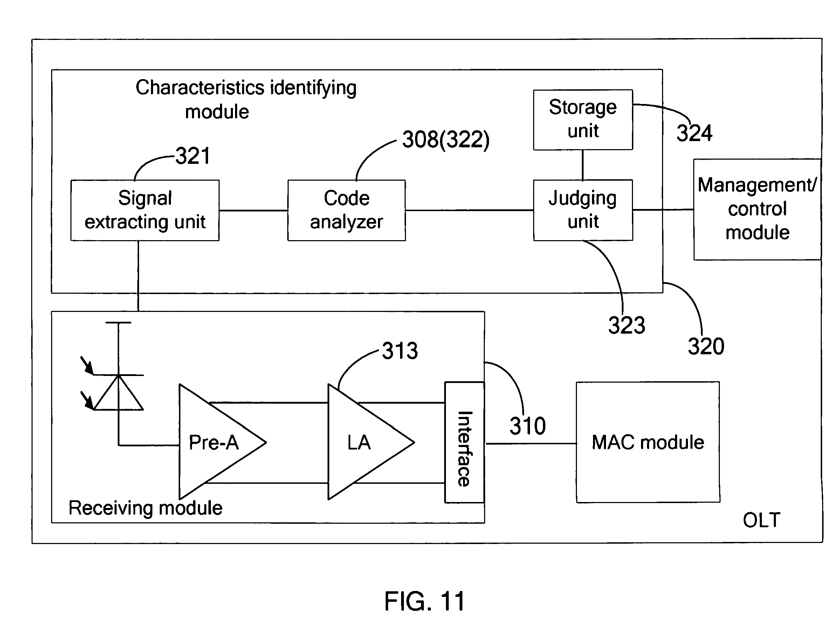

As shown in FIG. 11, in another optional scheme, the signal characteristics obtaining unit 322 may serve as a code characteristics obtaining unit, and may obtain the code characteristics of the detection signals by performing code pattern analysis on the detection signals. Specifically, a signal characteristics obtaining unit 322 may include a code analyzer 308 which is configured to obtain the code characteristics of the detection signals by analyzing the code pattern of the extracted detection signals. In a specific embodiment, the signal extracting unit 321 may extract signals from pins of the MAC chip 353 of the MAC module 350 as detection signals, and the code analyzer 308 may analyze the code pattern of the detection signals, and output the corresponding code characteristics. In addition, the code pattern reference value (such as 0xABC..., where A, B, and C may be any hexadecimal numbers) corresponding to the P2P ONU may be preset inside the storage unit 324. The signal characteristic obtaining unit 322 obtains the code characteristics of the detection signals through the code analyzer 308, and sends the code characteristics to the judging unit 323. Upon discovering that the code characteristics of the detection signals match the preset code reference value, the judging unit 323 can quickly judge that a P2P ONU is connected into the system, and send a corresponding indication signal. Additionally, the clock of the P2P ONU is not necessarily synchronous with the clock of the P2MP ONU, and therefore, the data recovery performed at the time of extracting the detection signals may lead to errors of some bits. In this case, the judging unit 323 may take the similarity of the code characteristics into account when performing comparison, and if the similarity reaches the preset extent of similarity between the code characteristics and the preset reference value, the judging unit 323 can judge that the code characteristics of the detection signals match the preset code reference value and therefore a P2P ONU is connected into the system.

Further, to improve accuracy of judgment, the judging unit 323 judges that a P2P ONU is connected into the system only after discovering that the signal characteristics match the preset code characteristic value for several consecutive times in a preset period (the length of the preset period may be set according to actual requirements). For example, a counter (not illustrated in the figure) records the number of times of matching, and the judging unit 323 sends the corresponding indication signal only when the number of times of matching in a period reaches a preset reference value.

Additionally, in the OLT provided by this embodiment of the present invention, the characteristics identifying module 320, the sending module 310, and the MAC module 350 may be stand-alone functional modules; alternatively, the characteristics identifying module 320 may be integrated into the sending module 310 or MAC module 350 for implementation.

Further, an optical module or an OLT board may be used to implement all or part of the following functions: the receiving function (corresponding to the receiving module 310) of the OLT, the characteristics identifying function (corresponding to the characteristics identifying module 320) of the P2P ONU, and the sending function (corresponding to the sending module 340). Accordingly, an optical module that is applicable to the OLT is further provided by an embodiment of the present invention. The optical module supports communication with the P2MP ONU through a shared optical transmission path in the optical access system.

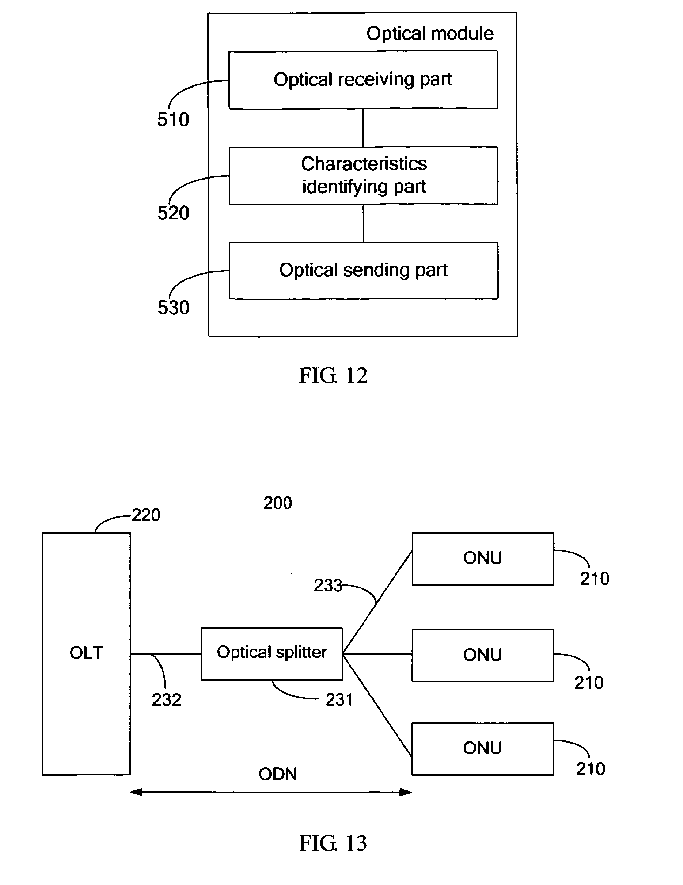

As shown in FIG. 12, the optical module may include:
an optical receiving part 510, configured to receive uplink signals transmitted through a shared optical transmission path that supports P2MP connections; and
a characteristics identifying part 520, configured to extract detection signals from the uplink signals, obtain corresponding signal characteristics of the detection signals, compare the signal characteristics with a reference characteristic value, and determine, according to a result of the comparison, whether the ONUs that send the uplink signals include a P2P ONU.

Further, the characteristics identifying part 520 is further configured to send an indication signal which indicates the determination result, so as to instruct a control part inside the OLT to raise a fault alarm.

Further, in an embodiment, the signal characteristics extracted by the characteristics identifying part 520 may be frequency characteristics, and the characteristics identifying part 520 includes a frequency characteristics analyzing unit. The frequency characteristics analyzing unit is configured to obtain frequency characteristics by filtering the detection signals and/or performing spectrum analysis on the detection signals. In another embodiment, the signal characteristics extracted by the characteristics identifying part 520 may be code characteristics, and the characteristics identifying part 520 includes a code characteristics analyzing unit. The code characteristics analyzing unit is configured to obtain code characteristics by performing code pattern analysis on the detection signals.

Additionally, the optical module may further include an optical sending part 530 which is configured to convert the signals delivered to the ONU into optical signals through an electric-optical converting unit (such as a laser), and send the optical signals through fibers.

It should be understood that the scheme that the characteristics identifying function (corresponding to the characteristics identifying part 520) is configured on the optical module in the OLT is only an optional scheme. Alternatively, the characteristics identifying part is configured on another module in the OLT. For example, in other optional schemes, the characteristics identifying part 520 may be set outside the optical module as a stand-alone functional module; or the characteristics identifying part 520 may be set in a circuit module designed for MAC inside the OLT.

Further, an optical access system capable of identifying ONUs is further provided by an embodiment of the present invention. The optical access system may be but is not limited to a P2MP PON system such as GPON system or EPON system. As regards how to identify the ONUs, refer to the method provided by the preceding embodiments for identifying ONUs in an optical access system.

As shown in FIG. 13, the optical access system 200 may include the OLT 220 described above and more than one ONU 210.

The ONUs 210 are coupled to the OLT 220 through a shared optical transmission path. Each ONU 210 sends uplink signals through the shared optical transmission path, and the ONUs 210 include P2MP ONUs.

The OLT 220 is configured to extract detection signals from the uplink signals provided by the ONUs 210, obtain the corresponding signal characteristics of the detection signals, compare the signal characteristics with a reference characteristic value, and determining, according to the result of the comparison, whether the ONUs 210 include a P2P ONU in the optical access system.

Further, the optical access system 200 may further include an Optical Distribution Network (ODN) 230 which is connected between the OLT and the ONU, and is configured to distribute or multiplex the data signals between the OLT and the ONU. The ODN may include an optical splitter 231. The optical splitter 231 may be connected to the OLT through a trunk fiber 232, and then may be connected to the ONUs 210 through tributary fibers 233. The trunk fiber 232 serves as a shared optical transmission path between the ONUs 210 and the OLT 220 in the optical access system.

The optical access system 200 provided by this embodiment of the present invention may use the OLT 220 to determine whether a P2P ONU is connected in the system, and raise a fault alarm quickly, which facilitates system maintenance and troubleshooting.

After description of the foregoing embodiments, persons skilled in the art may clearly understand that the embodiments of the present invention may be implemented through hardware, or through software in addition to a necessary universal hardware platform. Based on such understanding, all or part of the contribution, which the technical schemes of the present invention make to the background technology, may be embodied by a software product. The software product may be stored in storage media such as ROM/RAM, magnetic disk, or CD-ROM, and incorporates several instructions for instructing a computer device (such as personal computer, server, or network device) to execute the method specified in any embodiment of the present invention or a part of the embodiment.

The foregoing descriptions are merely exemplary embodiments of the present invention, but not intended to limit the scope of the present invention. Any modifications, variations or replacement that can be easily derived by those skilled in the art shall fall within the scope of the present invention. Therefore, the protection scope of the present invention is subj ect to the appended claims.

## Claims

1. A method for identifying an optical network unit (ONU) applied in an optical access system, comprising:
receiving uplink signals sent by a plurality of ONUs through a shared optical transmission path;
extracting detection signals from the uplink signals, and obtaining signal characteristics of the detection signals; and
comparing the signal characteristics with a reference characteristic value, and determining, according to a result of the comparison, whether a point-to-point connection-based (P2P) ONU exists in the ONUs that send the uplink signals.

2. The method according to claim 1, wherein:
the extracting detection signals from the uplink signals comprises:
extracting the detection signals by mirroring output signals of an optical receiver that receives the uplink signals; or
extracting the detection signals from an inside or an output side of an amplifier that amplifies the uplink signals; or
extracting the detection signals from a circuit module that performs Media Access Control (MAC) processing on the uplink signals.

3. The method according to claim 1, wherein:
the obtaining signal characteristics of the detection signals comprises:
obtaining frequency characteristics of the detection signals by filtering the detection signals or performing a spectrum analysis on the detection signals; or
obtaining code characteristics of the detection signals by performing a code pattern analysis on the detection signals.

4. The method according to any of claims 1-3, wherein:
the reference characteristic value is a frequency reference value and/or a code pattern reference value.

5. The method according to claim 1, further comprising:
detecting the uplink signals periodically or in real time to judge whether a preset trigger condition is fulfilled so as to determine whether to extract the detection signals and obtain the signal characteristics,
wherein the preset trigger condition comprises: a Bit Error Rate (BER) of the uplink signals increases upon a condition that a received optical power is normal; or, delimitation or framing of the uplink signals fails.

6. The method according to claim 5, further comprising:
stopping uplink sending of point-to-multipoint connection-based (P2MP) ONUs by reserving a empty window in an uplink direction or by suspending uplink bandwidth granting when the preset trigger condition is fulfilled.

7. An optical line terminal (OLT), comprising:
a receiving module, configured to receive uplink signals sent by a plurality of optical network units (ONUs) through a shared optical transmission path;
a characteristics identifying module, configured to extract detection signals from the uplink signals received by the receiving module, obtain signal characteristics of the detection signals, compare the signal characteristics with a reference characteristic value, and determining, according to a result of the comparison, whether the ONUs that send the uplink signals include a point-to-point connection-based (P2P) ONU.

8. The OLT according to claim 7, wherein:
the receiving module comprises an optical receiver for receiving the uplink signals and an amplifier connected with the optical receiver;
the characteristics identifying module comprises a signal extracting unit, and the signal extracting unit is configured to extract the detection signals by mirroring ouput signals of the optical receiver, or extract the detection signals from an inside or an output side of the amplifier.

9. The OLT according to claim 7, further comprising:
a circuit module configured to perform Media Access Control (MAC) processing for the uplink signals received by the receiving module;
wherein the characteristics identifying module comprises a signal extracting unit, connected to the circuit module, and the signal extracting unit is configured to extract the detection signals from the circuit module.

10. The OLT according to any of claims 7-9, wherein:
the characteristics identifying module comprises a signal characteristics obtaining unit, and the signal characteristics obtaining unit is configured to obtain frequency characteristics by filtering the detection signals or by performing a spectrum analysis on the detection signals; or is configured to obtain code characteristics of the detection signals by performing a code pattern analysis on the detection signals.

11. The OLT according to claim 10, further comprising:
a management/control module, configured to preset a reference characteristic value or set the reference characteristic value dynamically in the characteristics identifying module, wherein the reference characteristic value comprise a frequency reference value and/or a code reference value.

12. An optical module, comprising:
an optical receiving part, configured to receive uplink signals sent by a plurality of optical network units (ONUs) through a shared optical transmission path; and
a characteristics identifying part, configured to extract detection signals from the uplink signals, obtain signal characteristics of the detection signals, compare the signal characteristics with a reference characteristic value, and determining, according to a result of the comparison, whether the ONUs that send the uplink signals include a point-to-point connection-based (P2P) ONU.

13. The optical module according to claim 12, wherein:
the signal characteristics are frequency characteristics, and the characteristics identifying part comprises a frequency characteristics analyzing unit that is configured to obtain the frequency characteristics by filtering the detection signals or performing a spectrum analysis on the detection signals.

14. The optical module according to claim 12, wherein:
the signal characteristics are code characteristics, and the characteristics identifying part comprises a code characteristics analyzing unit which is configured to obtain the code characteristics by performing a code pattern analysis on the detection signals.

15. An optical access system, comprising:
a plurality of optical network units (ONUs), configured to send uplink signals through a shared optical transmission path;
an optical line terminal (OLT), configured to receive the uplink signals, extract detection signals from the uplink signals, obtain signal characteristics of the detection signals, compare the signal characteristics with a reference characteristic value, and determining, according to the result of the comparison, whether the ONUs that send the uplink signals include a point-to-point connection-based (P2P) ONU.
